# EUROPEAN PATENT APPLICATION

(11) **EP 4 664 853 A1**
(43) Date of publication of application: **17.12.2025**
(21) Application number: 24766301.6
(22) Date of filing: 28.02.2024
(51) Int. Cl.: H04L 47/52

(54) **LINK WIDTH SWITCHING METHOD, COMMUNICATION APPARATUS, AND COMMUNICATION SYSTEM**

(30) Priority: 06.03.2023 CN 202310241857
(71) Applicant: Huawei Technologies Co., Ltd., Shenzhen, Guangdong 518129 (CN)
(72) Inventor: LI, Yun, Shenzhen, Guangdong 518129 (CN); ZHOU, Weiguang, Shenzhen, Guangdong 518129 (CN)
(74) Representative: Goddar, Heinz J.
(86) International application number: PCT/CN2024/079008
(87) International publication number: WO 2024/183579

(57) **Abstract**

This application provides a link width switching method, a communication apparatus, and a communication system. The method includes: sending a logical layer block to a second device, where the logical layer block includes a link width switching command, and the link width switching command is used to adjust a state of a transmit lane from a first device to the second device; and sending a state refresh pattern to the second device, where the state refresh pattern is used for the link width switching command to synchronously take effect between the first device and the second device. In this solution, the first device performs dynamic link width switching based on a bandwidth change of the first device, and notifies the second device by using the link width switching command. This can implement flexible link width switching, reduce power consumption between ports of the first device and the second device, and improve fineness and negotiation efficiency of power consumption management.

## Description

### CROSS-REFERENCE TO RELATED APPLICATIONS

This application claims priority to Chinese Patent Application No. 202310241857.1, filed with the China National Intellectual Property Administration on March 6, 2023 and entitled "LINK WIDTH SWITCHING METHOD, COMMUNICATION APPARATUS, AND COMMUNICATION SYSTEM", which is incorporated herein by reference in its entirety.

### TECHNICAL FIELD

This application relates to the field of communication technologies, and in particular, to a link width switching method, a communication apparatus, and a communication system.

### BACKGROUND

For data transmission, various interface devices need to be used. These interface devices need to consume power in a data transmission process, and power consumption is closely related to an operating state of the interface device. In a data transmission state, power consumption is high. When no data is being transmitted, the interface device may be in a low power consumption state, and power consumption is low.

Port protocol development is gradually trending toward "tunneling". That is, a port can transmit a plurality of types of data at the same time. For example, general data and video data can be transmitted at the same time. As a result, a data bandwidth changes dynamically during data transmission through the port. If a state of the port remains unchanged during this period, bandwidth waste occurs and port power consumption is increased.

### SUMMARY

Embodiments of this application provide a link width switching method, a communication apparatus, and a communication system, to reduce power consumption between ports of different devices.

According to a first aspect, an embodiment of this application provides a link width switching method. The method may be performed by a first device or a module (for example, a chip) used in a first device. For example, the first device performs the method. The method includes: sending a logical layer block to a second device, where the logical layer block includes a link width switching command, and the link width switching command is used to adjust a state of a transmit lane from the first device to the second device; and sending a state refresh pattern to the second device, where the state refresh pattern is used for the link width switching command to synchronously take effect between the first device and the second device.

In the foregoing solution, the first device performs dynamic link width switching based on a bandwidth change of the first device, and notifies the second device by using the link width switching command. This can implement flexible link width switching, reduce power consumption between ports of the first device and the second device, and improve fineness and negotiation efficiency of power consumption management.

In a possible implementation method, that the link width switching command is used to adjust the state of the transmit lane from the first device to the second device includes: The link width switching command indicates an adjusted state of the transmit lane from the first device to the second device, and the state includes a service transmission state and an electrical idle state.

In a possible implementation method, that the logical layer block includes the link width switching command includes: The logical layer block includes a logical layer packet, and the logical layer packet includes the link width switching command.

In a possible implementation method. The method includes: periodically sending a logical layer block start pattern to the second device, where the logical layer block start pattern is used for clock synchronization and lock state check between the first device and the second device.

In the foregoing solution, the logical layer block start pattern is sent, so that clock synchronization between the first device and the second device can be ensured. This helps correctly transmit data between the first device and the second device.

In a possible implementation method, the link width switching command is a lane down command, and the lane down command is used to decrease a quantity of transmit lanes in the service transmission state in transmit lanes from the first device to the second device.

In a possible implementation method, the transmit lanes from the first device to the second device include at least one first lane; and the method further includes: sending an electrical idle pattern on the at least one first lane, where the electrical idle pattern indicates to adjust a state of the at least one first lane from the service transmission state to the electrical idle state; and adjusting the state of the at least one first lane to the electrical idle state.

In a possible implementation method, the link width switching command is a lane up command, and the lane up command is used to increase a quantity of transmit lanes in the service transmission state in transmit lanes from the first device to the second device.

In a possible implementation method, the transmit lanes from the first device to the second device include at least one second lane; and the method further includes: sending an electrical idle exit pattern on the at least one second lane, where the electrical idle exit pattern indicates to adjust a state of the second lane from the electrical idle state to the service transmission state; and adjusting the state of the at least one second lane to the service transmission state.

In a possible implementation method, the method further includes: sending a fast lock pattern on the at least one second lane, where the fast lock pattern is used by the second device for fast locking of the at least one second lane.

In the foregoing solution, the fast lock pattern is sent, so that it can be ensured that a state of the lane between the first device and the second device is quickly adjusted.

In a possible implementation method, the transmit lanes from the first device to the second device include at least one target lane, and the target lane is a lane in the service transmission state; and the sending the logical layer block to the second device includes: sending the logical layer block on the at least one target lane.

When the transmit lanes from the first device to the second device include at least two target lanes, each of the at least two target lanes carries some information in the logical layer block.

In the foregoing solution, the first device distributes the logical layer block to a plurality of lanes for sending, so that a sending speed can be improved.

In a possible implementation method, the logical layer block further includes at least one transaction layer packet, and the transaction layer packet is used to carry service data.

According to a second aspect, an embodiment of this application provides a link width switching method. The method may be performed by a second device or a module (for example, a chip) used in a second device. For example, the second device performs the method. The method includes: receiving a logical layer block from a first device, where the logical layer block includes a link width switching command, and the link width switching command is used to adjust a state of a transmit lane from the first device to the second device; and receiving a state refresh pattern from the first device, where the state refresh pattern is used for the link width switching command to synchronously take effect between the first device and the second device.

In the foregoing solution, the first device performs dynamic link width switching based on a bandwidth change of the first device, and notifies the second device by using the link width switching command. This can implement flexible link width switching, reduce power consumption between ports of the first device and the second device, and improve fineness and negotiation efficiency of power consumption management.

In a possible implementation method, that the link width switching command is used to adjust the state of the transmit lane from the first device to the second device includes: The link width switching command indicates an adjusted state of the transmit lane from the first device to the second device, and the state includes a service transmission state and an electrical idle state.

In a possible implementation method, that the logical layer block includes the link width switching command includes: The logical layer block includes a logical layer packet, and the logical layer packet includes the link width switching command.

In a possible implementation method. The method includes: periodically receiving a logical layer block start pattern from the first device, where the logical layer block start pattern is used for clock synchronization and lock state check between the first device and the second device.

In the foregoing solution, the logical layer block start pattern is sent, so that clock synchronization between the first device and the second device can be ensured. This helps correctly transmit data between the first device and the second device.

In a possible implementation method, the link width switching command is a lane down command, and the lane down command is used to decrease a quantity of transmit lanes in the service transmission state in transmit lanes from the first device to the second device.

In a possible implementation method, the transmit lanes from the first device to the second device include at least one first lane; and the method further includes: receiving an electrical idle pattern on the at least one first lane, where the electrical idle pattern indicates to adjust a state of the at least one first lane from the service transmission state to the electrical idle state; and adjusting the state of the at least one first lane to the electrical idle state.

In a possible implementation method, the link width switching command is a lane up command, and the lane up command is used to increase a quantity of transmit lanes in the service transmission state in transmit lanes from the first device to the second device.

In a possible implementation method, the transmit lanes from the first device to the second device include at least one second lane; and the method further includes: receiving an electrical idle exit pattern on the at least one second lane, where the electrical idle exit pattern indicates to adjust a state of the at least one second lane from the electrical idle state to the service transmission state; and adjusting the state of the at least one second lane to the service transmission state.

In a possible implementation method, the method further includes: receiving a fast lock pattern on the second lane, where the fast lock pattern is used by the second device for fast locking of the second lane.

In the foregoing solution, the fast lock pattern is sent, so that it can be ensured that a state of the lane between the first device and the second device is quickly adjusted.

In a possible implementation method, the transmit lanes from the first device to the second device include at least one target lane, and the target lane is a lane in the service transmission state; and the receiving the logical layer block from the first device includes: receiving the logical layer block on the at least one target lane.

When the transmit lanes from the first device to the second device include at least two target lanes, each of the at least two target lanes carries some information in the logical layer block.

In the foregoing solution, the first device distributes the logical layer block to a plurality of lanes for sending, so that the second device receives different parts of one logical layer block on the plurality of lanes, thereby improving a sending speed.

In a possible implementation method, the logical layer block further includes at least one transaction layer packet, and the transaction layer packet is used to carry service data.

According to a third aspect, an embodiment of this application provides a link width switching method. The method may be performed by a first device or a module (for example, a chip) used in a first device. For example, the first device performs the method. The method includes: sending an electrical idle exit pattern on a transmit lane from the first device to a second device, where the electrical idle exit pattern indicates that a state of the transmit lane from the first device to the second device is adjusted from an electrical idle state to a service transmission state; and continuously sending fast lock patterns on the transmit lane from the first device to the second device, where the fast lock pattern is used by the second device for fast locking of the transmit lane from the first device to the second device.

In the foregoing solution, the first device performs dynamic link width switching based on a bandwidth change of the first device, and enables all transmit lanes from the first device to the second device by using the electrical idle exit pattern and the fast lock pattern, to implement flexible link width switching, thereby reducing power consumption between ports of the first device and the second device, and improving fineness and negotiation efficiency of power consumption management.

In a possible implementation method, the method further includes: when a quantity of sent fast lock patterns is greater than a first threshold, sending a state refresh pattern on the transmit lane from the first device to the second device, where the state refresh pattern is used for the transmit lane from the first device to the second device to synchronously enter the service transmission state.

In a possible implementation method, the method further includes: after sending the state refresh pattern, adjusting the state of the transmit lane from the first device to the second device to the service transmission state.

According to a fourth aspect, an embodiment of this application provides a link width switching method. The method may be performed by a second device or a module (for example, a chip) used in a second device. For example, the second device performs the method. The method includes: receiving an electrical idle exit pattern on a transmit lane from a first device to the second device, where the electrical idle exit pattern indicates that a state of the transmit lane from the first device to the second device is adjusted from an electrical idle state to a service transmission state; and continuously receiving fast lock patterns on the transmit lane from the first device to the second device, where the fast lock pattern is used by the second device for fast locking of the transmit lane from the first device to the second device.

In the foregoing solution, the first device performs dynamic link width switching based on a bandwidth change of the first device, and enables all transmit lanes from the first device to the second device by using the electrical idle exit pattern and the fast lock pattern, to implement flexible link width switching, thereby reducing power consumption between ports of the first device and the second device, and improving fineness and negotiation efficiency of power consumption management.

In a possible implementation method, the method further includes: receiving a state refresh pattern on the transmit lane from the first device to the second device, where the state refresh pattern is used for the transmit lane from the first device to the second device to synchronously enter the service transmission state.

In a possible implementation method, the method further includes: after receiving the state refresh pattern, adjusting the state of the transmit lane from the first device to the second device to the service transmission state.

According to a fifth aspect, an embodiment of this application provides a communication apparatus. The apparatus may be a first device, or may be a module (for example, a chip) used in a first device. The apparatus has a function of implementing any one of the implementation methods of the first aspect or the third aspect. The function may be implemented by hardware, or may be implemented by hardware executing corresponding software. The hardware or the software includes one or more modules corresponding to the function.

According to a sixth aspect, an embodiment of this application provides a communication apparatus. The apparatus may be a second device, or may be a module (for example, a chip) used in a second device. The apparatus has a function of implementing any one of the implementation methods of the second aspect or the fourth aspect. The function may be implemented by hardware, or may be implemented by hardware executing corresponding software. The hardware or the software includes one or more modules corresponding to the function.

According to a seventh aspect, an embodiment of this application provides a communication apparatus, including units or means (means) for performing the steps of any one of the implementation methods of the first aspect to the fourth aspect.

According to an eighth aspect, an embodiment of this application provides a communication apparatus, including a processor and an interface circuit. The processor is configured to communicate with another apparatus through the interface circuit, and perform any one of the implementation methods of the first aspect to the fourth aspect. There are one or more processors.

According to a ninth aspect, an embodiment of this application provides a communication apparatus, including a processor coupled to a memory. The processor is configured to invoke a program stored in the memory, to perform any one of the implementation methods of the first aspect to the fourth aspect. The memory may be located inside or outside the apparatus. In addition, there may be one or more processors.

According to a tenth aspect, an embodiment of this application provides a communication apparatus, including a processor and a memory. The memory is configured to store computer instructions. When the apparatus runs, the processor executes the computer instructions stored in the memory, to enable the apparatus to perform any one of the implementation methods of the first aspect to the fourth aspect.

According to an eleventh aspect, an embodiment of this application further provides a computer program product. The computer program product includes a computer program or instructions, and when the computer program or instructions is/are run on a communication apparatus, any one of the implementation methods of the first aspect to the fourth aspect is performed.

According to a twelfth aspect, an embodiment of this application further provides a computer-readable storage medium. The computer-readable storage medium stores instructions. When the instructions are run on a communication apparatus, any one of the implementation methods of the first aspect to the fourth aspect is performed.

According to a thirteenth aspect, an embodiment of this application further provides a chip system, including a processor, configured to perform any one of the implementation methods of the first aspect to the fourth aspect.

According to a fourteenth aspect, an embodiment of this application further provides a communication system. The communication system includes a first device configured to perform any one of the implementation methods of the first aspect, and a second device configured to perform any one of the implementation methods of the first aspect.

According to a fifteenth aspect, an embodiment of this application further provides a communication system. The communication system includes a first device configured to perform any one of the implementation methods of the third aspect, and a second device configured to perform any one of the implementation methods of the fourth aspect.

According to a sixteenth aspect, an embodiment of this application further provides a link width switching method, including: A first device sends a logical layer block to a second device, where the logical layer block includes a link width switching command, and the link width switching command is used to adjust a state of a transmit lane from the first device to the second device; the second device receives the logical layer block; the first device sends a state refresh pattern to the second device, where the state refresh pattern is used for the link width switching command to synchronously take effect between the first device and the second device; and the second device receives the state refresh pattern.

According to a seventeenth aspect, an embodiment of this application further provides a link width switching method, including: The first device sends an electrical idle exit pattern on a transmit lane from the first device to a second device, where the electrical idle exit pattern indicates that a state of the transmit lane from the first device to the second device is adjusted from an electrical idle state to a service transmission state; the second device receives the electrical idle exit pattern; the first device continuously sends fast lock patterns on the transmit lane from the first device to the second device, where the fast lock pattern is used by the second device for fast locking of the transmit lane from the first device to the second device; and the second device continuously receives the fast lock patterns.

### BRIEF DESCRIPTION OF DRAWINGS

FIG. 1 is a diagram of a communication architecture to which an embodiment of this application is applicable;
FIG. 2(a) is a schematic flowchart of a link width switching method according to an embodiment of this application;
FIG. 2(b) is a schematic flowchart of a link width switching method according to an embodiment of this application;
FIG. 3 is an example diagram of sending an LLB by a first device and receiving the LLB by a second device according to an embodiment of this application;
FIG. 4(a) is an example diagram of a structure of a TLP according to an embodiment of this application;
FIG. 4(b) is an example diagram of a structure of an LLP according to an embodiment of this application;
FIG. 4(c) is an example diagram of a structure of an LLB according to an embodiment of this application;
FIG. 5 is a diagram of link state switching according to an embodiment of this application;
FIG. 6(a) is a diagram of a full-speed state according to an embodiment of this application;
FIG. 6(b) is a diagram of a data transmission process according to an embodiment of this application;
FIG. 6(c) is an example diagram of lane allocation shown in FIG. 6(c);
FIG. 6(d) is an example diagram of lane allocation used when an MUP sends an LLB according to an embodiment of this application;
FIG. 6(e) is a diagram of service transmission in a full-speed state according to an embodiment of this application;
FIG. 7(a) is a diagram of an MDP entering an idle state according to an embodiment of this application;
FIG. 7(b) is an example diagram of lane allocation used when an MDP sends an LLB according to an embodiment of this application;
FIG. 7(c) is a diagram of service transmission of an MDP in an idle state and an MUP in a full-speed state according to an embodiment of this application;
FIG. 8(a) is a diagram of an MDP adjusting an idle state and an MUP entering an idle state according to an embodiment of this application;
FIG. 8(b) is an example diagram of lane allocation used when an MDP sends an LLB according to an embodiment of this application;
FIG. 8(c) is an example diagram of lane allocation used when an MUP sends an LLB according to an embodiment of this application;
FIG. 8(d) is a diagram of service transmission of an MDP in an idle state and an MUP in an idle state according to an embodiment of this application;
FIG. 9(a) is a diagram of an MDP adjusting an idle state and an MUP entering a zero-speed state according to an embodiment of this application;
FIG. 9(b) is an example diagram of lane allocation used when an MDP sends an LLB according to an embodiment of this application;
FIG. 9(c) is an example diagram of lane allocation used when an MUP sends an LLB according to an embodiment of this application;
FIG. 9(d) is a diagram of service transmission of an MDP in an idle state according to an embodiment of this application;
FIG. 10(a) is a diagram of restoring an MDP and an MUP to a full-speed state according to an embodiment of this application;
FIG. 10(b) is an example diagram of lane allocation used when an MDP sends an LLB according to an embodiment of this application;
FIG. 10(c) is an example diagram of lane allocation used when an MUP sends an LLB according to an embodiment of this application;
FIG. 11(a) is an example diagram of a scenario in which a lane down command overrides a lane down command according to an embodiment of this application;
FIG. 11(b) is an example diagram of a scenario in which a lane up command overrides a lane down command according to an embodiment of this application;
FIG. 11(c) is an example diagram of a scenario in which a lane down command overrides a lane up command according to an embodiment of this application;
FIG. 11(d) is an example diagram of a scenario in which a lane up command overrides a lane up command according to an embodiment of this application;
FIG. 12 is a diagram of a structure of a communication apparatus according to an embodiment of this application; and
FIG. 13 is a diagram of a structure of a communication apparatus according to an embodiment of this application.

### DESCRIPTION OF EMBODIMENTS

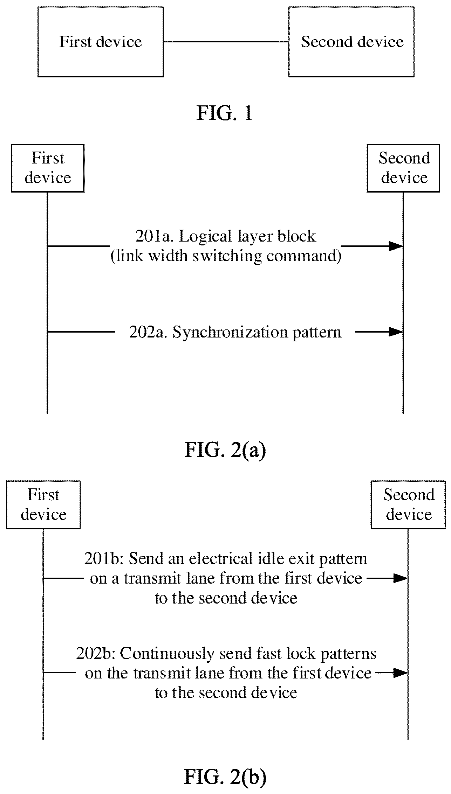

FIG. 1 is a diagram of a communication architecture to which an embodiment of this application is applicable. The architecture includes a first device and a second device. When the first device serves as a transmit end and the second device serves as a receive end, the first device may be referred to as a transmit end device, and the second device may be referred to as a receive end device. When the second device serves as a transmit end and the first device serves as a receive end, the second device may be referred to as a transmit end device, and the first device may be referred to as a receive end device. Specific types of the first device and the second device are not limited in this application. In other words, the first device and the second device may be devices of any type.

An L0p state is introduced to a peripheral component interconnect express (peripheral component interconnect express, PCIE) 6 to implement dynamic link width adjustment during data transmission and reduce power consumption. The LOp state indicates that some lanes of the PCIE6 port are in an electrical idle (electrical idle, EI) state, which is also referred to as a low power consumption state, and the other lanes are in a high-speed operating state, to reduce overall power consumption of the port while remain in the data transmission state. In addition, the PCIE supports only x1, x2, x4, x8, or x16 link width adjustment. That is, a quantity of lanes operating at a high speed need to be 1, 2, 4, 8, or 16. Specific implementation steps for the LOp state are as follows:
(1) In a link training phase, a downstream port (downstream port, DSP) and an upstream port (upstream port, USP) of the PCIE port negotiate with each other to determine whether both the DSP and the USP support the LOp state. Dynamic link width adjustment can be performed only when both the DSP and the USP support the L0p state.
(2) In the process of entering service data transmission, if a bandwidth of one of two interconnected ports (that is, a DSP and a USP) changes, a dynamic link width adjustment request can be initiated.
(3) After receiving the dynamic link width adjustment request, a peer end needs to determine, based on an actual port state of the peer end, whether link width adjustment can be performed. If link width adjustment can be performed, an acknowledgment (ACK) is fed back to notify the peer end that dynamic link width adjustment can be started. Otherwise, a negative acknowledgment (NACK) is fed back.
(4) Link width adjustment can be started only after both ends of a same link support dynamic link adjustment and reach a consensus. That is, a transmit lane and a receive lane of the PCIE port are mutually restricted in link width adjustment. When a bandwidth of the transmit lane decreases but a receive bandwidth remains unchanged, a link width of the transmit lane cannot be decreased.

The foregoing power consumption reduction solution has the following disadvantages: First, the PCIE port is a full-duplex port. When link width adjustment is performed, the DSP and the USP are mutually restricted, and both the DSP and the USP need to meet the requirements. For example, a bandwidth of the DSP decreases and can be switched from x16 to x8. However, the USP needs to operate in x16 state. In this case, the two ports of the PCIE need to operate in x16 state, resulting in DSP power consumption waste. Second, the link width supports only x1, x2, x4, x8, or x16, with limited fineness in power consumption reduction control. For example, currently, the port requires only x5 bandwidth to meet the requirement. However, due to the link width limitation, the entire port can only operate at x8, resulting in a waste of bandwidth of three lanes. Third, link width adjustment of the PCIE port needs to be negotiated and confirmed by the transmit end and the receive end, and negotiation efficiency is low.

Problems of a limited link width switching method, insufficient fineness of power consumption management, and low negotiation efficiency need to be resolved.

FIG. 2(a) is a schematic flowchart of a link width switching method according to an embodiment of this application. The method includes the following steps.

Step 201a: A first device sends a logical layer block (logical layer block, LLB) to a second device, and correspondingly, the second device receives the logical layer block.

The LLB includes a link width switching command, and the link width switching command is used to adjust a state of a transmit lane from the first device to the second device. The link width switching command includes a lane down (lane down) command and a lane up (lane up) command.

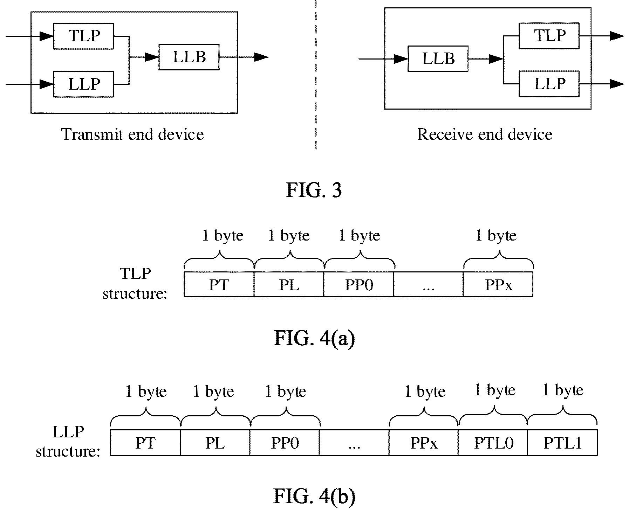

In an implementation method, the LLB includes a logical layer packet (logical layer packet, LLP), and the LLP includes the link width switching command. In other words, the link width switching command is carried in the LLP of the LLB for transmission. Optionally, the LLB further includes at least one transaction layer packet (transaction layer packet, TLP), and the TLP is used to carry service data. FIG. 3 is an example diagram of sending an LLB by a first device and receiving the LLB by a second device according to an embodiment of this application. The first device encapsulates a control command (for example, a link width switching command or a command of another type) into an LLP, encapsulates service data into a TLP, forms an LLB by using the encapsulated LLP and TLP, and performs data processing and sending on the LLB, to implement bandwidth sharing between logical layer management and service data. The second device completes receiving and parsing of the LLB, obtains the LLP and the TLP through parsing, and then obtains the control command from the LLP through parsing.

FIG. 4(a) is an example diagram of a structure of a TLP according to an embodiment of this application. In this example, one TLP includes a packet type (packet type, PT) field, a packet length (packet length, PL) field, and several packet payload (packet payload, PP) fields. The PP field may be used to carry service data. The PT, the PL, and the PP each occupy one byte, that is, 8 bits. In this example, the TLP does not include a packet tail structure.

FIG. 4(b) is an example diagram of a structure of an LLP according to an embodiment of this application. In this example, one LLP includes a packet type (PT) field, a packet length (PL) field, several packet payload (PP) fields, and one or more packet tail (packet tail, PTL) fields. The PP field may be used to carry a control command. The PT, PL, PP, and PTL each occupy one byte. In this example, the LLP includes a packet tail structure, and is used to perform cyclic redundancy check (cyclic redundancy check, CRC) on transmitted data.

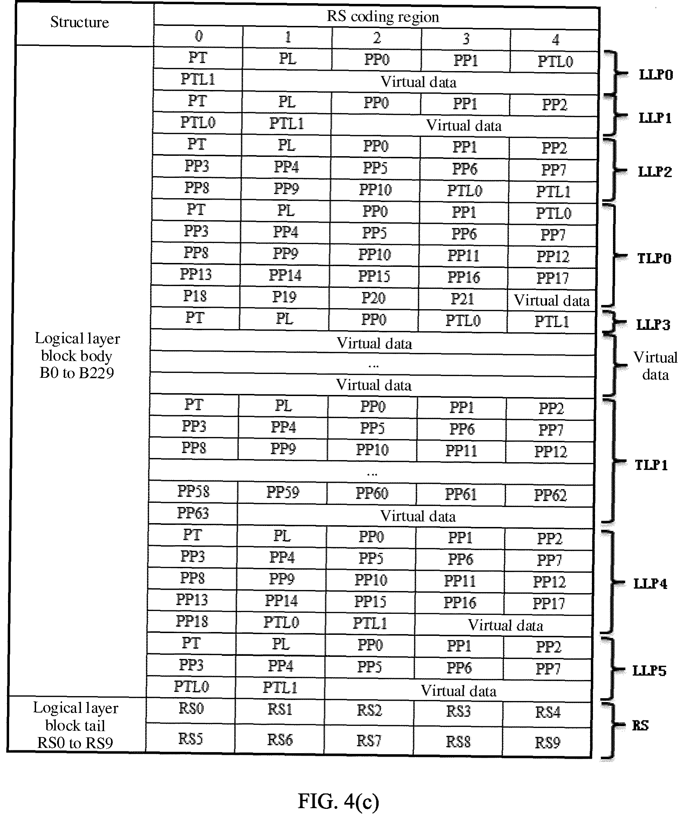

FIG. 4(c) is an example diagram of a structure of an LLB according to an embodiment of this application. The LLB includes a plurality of LLPs and a plurality of TLPs. The LLP and the TLP are sequentially encapsulated in corresponding locations of the LLB according to a generation sequence. For example, in the example in FIG. 4(a), the LLB sequentially includes an LLP0, an LLP1, an LLP2, a TLP0, an LLP3, virtual data, a TLP1, an LLP5, and 10 reed-solomon (reed-solomon, RS) codes, and the LLB occupies 240 bytes in total. For another example, in another example, one LLB sequentially includes a TLP0, a TLP1, an LLP0, a TLP2, a TLP3, an LLP1, a TLP4, and .... Virtual data (dummy) may be added to one LLP or one TLP. RS in the LLB is used for checking. In the example of the LLB in FIG. 4(c), a single LLB is evenly allocated to five RS coding regions. At a transmit end, RS coding is independently performed in each RS coding region, and at a receive end, RS decoding and error correction are independently performed in each RS coding region, to protect LLB data.

In an implementation method, the link width switching command specifically indicates an adjusted state of the transmit lane from the first device to the second device, and the state includes a service transmission state and an electrical idle state. The transmit lane in the service transmission state may be used to send data, and the transmit lane in the electrical idle state cannot be used to send data.

A link state of a port of a device (for example, the first device or the second device) includes a full-speed state, an idle state, and a zero-speed state. Specifically:
(1) The full-speed state means that all enabled lanes at a logical layer are in a logical layer status of high-speed (logical layer status of high-speed, LLSH), and the link is in a maximum bandwidth transmission state at a current rate. The LLSH is also referred to as the service transmission state, that is, the LLB can be normally transmitted.

For example, transmit lanes from the first device to the second device include transmit lanes 0 to 5, that is, six transmit lanes in total. From a perspective of the second device, the six transmit lanes are also referred to as six receive lanes from the second device to the first device. When the transmit lanes 0 to 5 are all in the service transmission state, the link of the port of the first device is in the full-speed state.

(2) The idle state means that some lanes in the enabled lanes at the logical layer are in the LLSH state, and other lanes are in a logical layer status of stand-by (logical layer status of stand-by, LLSS) state. An upper layer may control a quantity of lanes that enter the LLSS state at the logical layer, and dynamically adjust a data bandwidth at a transaction layer. The LLSS is also referred to as the electrical idle state, that is, the service data cannot be transmitted.

The foregoing six lanes of the first device are used as an example. When some of the transmit lanes 0 to 5 are in the service transmission state, and the other transmit lanes are in the electrical idle state, the link of the port of the first device is in the idle state.

(3) The zero-speed state means that all the enabled lanes at the logical layer are in the LLSS state, service data transmission on a primary link is suspended at the logical layer, and the data bandwidth at the transaction layer is 0.

The foregoing six lanes of the first device are used as an example. When the transmit lanes 0 to 5 are all in the electrical idle state, the link of the port of the first device is in the zero-speed state.

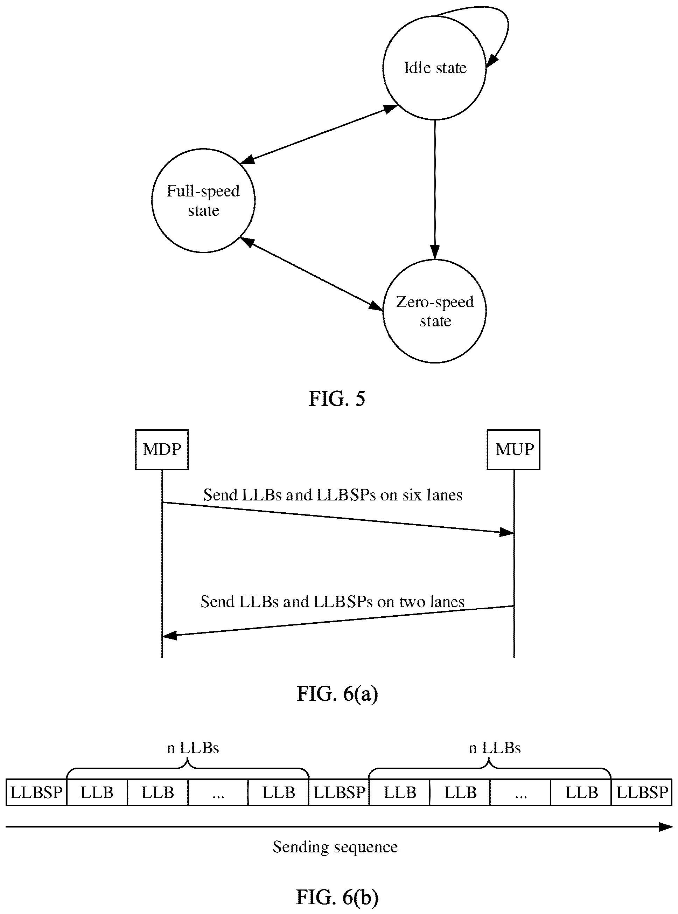

FIG. 5 is a diagram of link state switching according to an embodiment of this application. Specifically, a link state of a port of a device includes a full-speed state, an idle state, and a zero-speed state. The full-speed state and the idle state may be mutually switched, the full-speed state and the zero-speed state may be mutually switched, different idle states may be mutually switched, and the idle state may be switched to the zero-speed state. However, the zero-speed state cannot be switched to the idle state.

In an implementation method, the transmit lanes from the first device to the second device include at least one target lane, and the target lane is a lane in the service transmission state. That the first device sends the logical layer block to the second device in step 201a may be specifically: The first device sends the logical layer block on the at least one target lane. When the transmit lanes from the first device to the second device include at least two target lanes, each of the at least two target lanes carries some information in the logical layer block. Correspondingly, the second device receives the logical layer block on the at least two target lanes. In other words, the logical layer block is distributed to each target lane for sending, so that sending efficiency can be improved.

In an implementation method, dynamic switching between link states of two devices is implemented through upper-layer control. In a link data transmission process, the first device controls, based on an amount of data transmitted on a link, the logical layer to decrease or increase a transmission link width. When a data transmission bandwidth of the link decreases, the logical layer may be controlled to decrease the link width. When a data transmission bandwidth of the link increases, the logical layer may be controlled to increase the link width.

Step 202a: The first device sends a state refresh pattern to the second device. Correspondingly, the second device receives the state refresh pattern.

The state refresh pattern (state refresh pattern, SRP) is used for the link width switching command to synchronously take effect between the first device and the second device. The state refresh pattern is also referred to as a synchronization pattern.

In an implementation method, the first device may further periodically send a logical layer block start pattern (logical layer block start pattern, LLBSP) to the second device, where the LLBSP is used for clock synchronization and lock state check between the first device and the second device. Specifically:
(1) Clock synchronization: There may be a slight deviation between a transmit clock of the first device and a receive clock of the second device. This deviation may cause a deviation between a data sending rate of the first device and a data receiving rate of the second device, that is, may cause accumulation of data received by the second device (a small amount of accumulated data may be temporarily stored by adding a buffer module). The LLBSP is periodically sent. When receiving the LLBSP, the second device completes processing of the accumulated data, to avoid a data loss caused when the accumulated data exceeds a buffer capability of the buffer module.
(2) Lock state check: The LLBSP is periodically sent, and the second device adjusts a block lock state based on a matching state between a sampled data stream and the LLBSP, to ensure correct reception and identification of different logical layer blocks subsequently. Specifically, because the logical layer blocks are continuously transmitted data streams, two consecutive logical layer blocks cannot be distinguished, and can be distinguished only by counting a start point and an end point. In a data stream transmission process, if 1-bit data is lost, identification of a subsequent logical layer block is misplaced, and an exception is caused. To reduce impact of this exception, the LLBSP is periodically inserted to implement block lock adjustment. In this way, the logical layer block after the LLBSP can be correctly identified.

Certainly, the LLBSP has only functions of clock synchronization and lock state check, and this is not limited in this application. In actual application, the LLBSP may further have another function.

The following separately describes different implementation methods when the link width switching command is a lane up command or a lane down command.
1. The link width switching command is a lane down command.

The lane down command is used to decrease a quantity of transmit lanes in the service transmission state in the transmit lanes from the first device to the second device.

When the data transmission bandwidth of the link between the first device and the second device decreases, the link width may be decreased. The upper layer of the first device sends the lane down command to the logical layer of the first device, and specifies a link width obtained after lane down. The logical layer constructs an LLP according to the lane down command, sends the LLP to the second device, and controls a lane that needs to be disabled to be enabled and enter the electrical idle state. The first device and the second device exchange link switching information by using the LLP, to implement synchronization of link switching by using the state refresh pattern.

In an implementation method, the transmit lanes from the first device to the second device include at least one first lane. The first lane is a lane whose state needs to be adjusted from the service transmission state to the electrical idle state, and is also referred to as a to-be-disabled transmit lane. The first device may send an electrical idle pattern (electrical idle pattern, EIP) on the at least one first lane, where the electrical idle pattern indicates to adjust a state of the at least one first lane from the service transmission state to the electrical idle state.

2. The link width switching command is a lane up command.

The lane up command is used to increase a quantity of transmit lanes in the service transmission state in the transmit lanes from the first device to the second device.

When the data transmission bandwidth of the link between the first device and the second device increases, the link width may be increased. The upper layer of the first device sends the lane up command to the logical layer of the first device, and specifies a link width obtained after lane up. The logical layer constructs an LLP according to the lane up command, sends the LLP to the second device, and controls a lane that needs to be enabled to be enabled and exit the electrical idle state. The first device and the second device exchange link switching information by using the LLP, to implement synchronization of link switching by using the state refresh pattern.

In an implementation method, the transmit lanes from the first device to the second device include at least one second lane. The second lane is a lane whose state needs to be adjusted from the electrical idle state to the service transmission state, and is also referred to as a to-be-enabled transmit lane. The first device sends an electrical idle exit pattern (electrical idle exit pattern, EIEP) on the at least one second lane, where the electrical idle exit pattern indicates to adjust a state of the second lane from the electrical idle state to the service transmission state.

In an implementation method, after sending the EIEP, the first device sends a fast lock pattern (fast lock pattern, FLP) on the at least one second lane, where the fast lock pattern is used by the second device for fast locking of the at least one second lane. Specifically, fast lock includes: (1) clock lock, so that the clock of the second device correctly collects the data stream sent by the first device. (2) Block lock is included, so that the second device correctly identifies the fast lock pattern from the received data stream, and remain in a correct identification state. After the second lane subsequently enters the service transmission state, the second device can correctly identify and distinguish between the logical layer block start pattern (LLBSP) and different logical layer blocks (LLB).

In the foregoing solution, the first device performs dynamic link width switching based on a bandwidth change of the first device, and notifies the second device by using the link width switching command. This can implement flexible link width switching, reduce power consumption between ports of the first device and the second device, and improve fineness and negotiation efficiency of power consumption management.

FIG. 2(b) is a schematic flowchart of a link width switching method according to an embodiment of this application. The method is applicable to a scenario in which a link state of a device is switched from a zero-speed state to a full-speed state. The method includes the following steps.

Step 201b: A first device sends an electrical idle exit pattern (EIEP) on a transmit lane from the first device to a second device. Correspondingly, the second device receives the electrical idle exit pattern on the transmit lane from the first device to the second device.

The electrical idle exit pattern indicates that a state of the transmit lane from the first device to the second device is adjusted from an electrical idle state to a service transmission state.

Specifically, when transmit lanes from the first device to the second device are all in the electrical idle state, the first device sends the EIEP on all the transmit lanes from the first device to the second device, to trigger all the transmit lanes to enter the service transmission state.

Step 202b: The first device continuously sends fast lock patterns (FLP) on the transmit lane from the first device to the second device. Correspondingly, the second device continuously receives the fast lock patterns on the transmit lane from the first device to the second device.

The fast lock pattern is used by the second device for fast locking of the transmit lane from the first device to the second device.

In an implementation method, when a quantity of sent fast lock patterns is greater than a first threshold, the first device sends a state refresh pattern on the transmit lane from the first device to the second device, where the state refresh pattern is used for the electrical idle exit pattern to synchronously take effect between the first device and the second device. Correspondingly, the second device receives the state refresh pattern on the transmit lane from the first device to the second device. The state refresh pattern is also referred to as a state refresh pattern (SRP).

In an implementation method, after the first device sends the state refresh pattern, the first device adjusts the state of the transmit lane from the first device to the second device to the service transmission state. After receiving the state refresh pattern, the second device adjusts the state of the transmit lane from the first device to the second device to the service transmission state.

In the foregoing solution, the first device performs dynamic link width switching based on a bandwidth change of the first device, and enables all the transmit lanes from the first device to the second device by using the electrical idle exit pattern and the fast lock pattern, to implement flexible link width switching, thereby reducing power consumption between ports of the first device and the second device, and improving fineness and negotiation efficiency of power consumption management.

The following describes the foregoing process in detail with reference to a specific example. In this example, a port of the first device is referred to as a downstream port (main downstream port, MDP), and a port of the second device is referred to as an upstream port (main upstream port, MUP). A maximum quantity of lanes on which the first device sends service data to the second device is 6, and a maximum quantity of lanes on which the second device sends service data to the first device is 2. Therefore, a lane configuration of the MDP is in a 6+2 mode, that is, six transmit (transmission, TX) lanes and two receive (reception, RX) lanes, and a lane configuration of the MUP is in a 2+6 mode, that is, two transmit lanes and six receive lanes. After link lock is completed, the MDP can send data via a maximum of six lanes and receive data via a maximum of two lanes, and the MUP can send data via a maximum of two lanes and receive data via a maximum of six lanes. It should be noted that this is merely an example, and a quantity of transmit lanes and a quantity of receive lanes of the device are not limited in actual application.

The following describes in detail a link state change process between the MDP and the MUP with reference to different scenarios. Table 1 below shows an example of a lane disabling change between the MDP and the MUP.

It should be noted that lanes 0 to 5 of the MDP are transmit lanes 0 to 5 of the MDP, and correspondingly, the MUP corresponds to receive lanes 0 to 5. Lanes 0 and 1 of the MUP are transmit lanes 0 and 1 of the MUP. Correspondingly, the MDP corresponds to receive lanes 0 and 1. A lane in the following example is a transmit lane, and is referred to as a lane for short below.

**Table 1**

| Scenario | Change | MDP | MUP |
|---|---|---|---|
| Scenario 1 (The MDP enters the full-speed state, and the MUP enters the full-speed state) | / | Lanes 0 to 5 are in the service transmission state. | Lanes 0 and 1 are in the service transmission state. |
| Scenario 2 (The MDP enters the idle state, and the MUP remains in the full-speed state) | Disable lanes 2 to 5 of the MDP | Lanes 0 and 1 are in the service transmission state. | Lanes 0 and 1 are in the service transmission state. |
| | | Lanes 2 to 5 are in the electrical idle state. | |
| Scenario 3 (The MDP adjusts the idle state, and the MUP enters the idle state) | Continue to disable the lane 1 of the MDP; and disable the lane 1 of the MUP | The lane 0 is in the service transmission state. | The lane 0 is in the service transmission state. |
| | | Lanes 1 to 5 are in the electrical idle state. | The lane 1 is in the electrical idle state. |
| Scenario 4 (The MDP adjusts the idle state, and the MUP enters the zero-speed state) | Enable lanes 1 and 2 of the MDP; and continue to disable lane 0 of the MUP | Lanes 0 to 2 are in the service transmission state. | Lanes 0 and 1 are in the electrical idle state. |
| | | Lanes 3 to 5 are in the electrical idle state. | |
| Scenario 5 (The MDP is restored to the full-speed state, and the MUP is restored to the full-speed state) | Enable lanes 3 to 5 of the MDP Enable lanes 0 and 1 of the MUP | Lanes 0 to 5 are in the service transmission state. | Lanes 0 and 1 are in the service transmission state. |

The foregoing scenario 1 to scenario 5 are used as examples in a time sequence. The following specifically describes the foregoing five scenarios.

Scenario 1: The MDP and the MUP enter the full-speed state.

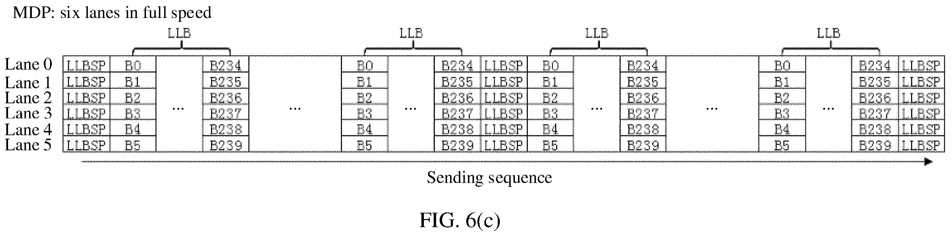

FIG. 6(a) is a diagram of the full-speed state according to an embodiment of this application. The MDP sends LLBs to the MUP on six lanes, and inserts and sends one logical layer block start pattern (LLBSP) every n LLBs, where n is a positive integer. FIG. 6(b) is a diagram of a data transmission process according to an embodiment of this application. For example, n=5. The MDP sequentially sends an LLB0, an LLB1, an LLB2, an LLB3, and an LLB4 on six lanes, then sends an LLBSP0 on the six lanes, then sends an LLB5, an LLB6, an LLB7, an LLB8, and an LLB9 on the six lanes, and then sends an LLBSP1 on the six lanes. The rest may be deduced by analogy. That the MDP sends the LLB0 on the six lanes means that bytes occupied by the LLB0 are allocated to the six lanes for sending. For example, a structure of the LLB0 is shown in FIG. 4(c), that is, the LLB0 occupies 240 bytes (that is, B0 to B239). In this case, bytes B0, B6, B12, ..., and B234 of the LLB0 may be sent on the lane 0, bytes B1, B7, B13, ..., and B235 of the LLB0 may be sent on the lane 1, bytes B2, B8, B14, ..., and B236 of the LLB0 may be sent on the lane 2, bytes B3, B9, B15, ..., and B237 of the LLB0 may be sent on the lane 3, bytes B4, B10, B16, ..., and B238 of the LLB0 may be sent on the lane 4, and bytes B5, B11, B17, ..., and B239 of the LLB0 may be sent on the lane 5. This is similar to other LLB and LLBSP sending manners. When sending is performed in this manner, the example in FIG. 6(b) may be represented as an example diagram of lane allocation shown in FIG. 6(c).

After receiving data bitstreams from the six lanes, the MUP may assemble the data bitstreams to obtain LLBs or LLBSPs. For the LLBs, the MUP first puts the assembled LLBs into a buffer for storage, and the MUP sequentially fetches the LLBs from the buffer for processing, for example, parses the LLBs to obtain LLPs and TLPs. For the LLBSPs, the MUP does not need to put the LLBSPs into the buffer. The LLBSP is mainly used to adjust a clock deviation between the MDP and the MUP. For example, when the MDP sends LLBs at an excessively high speed, and the MUP does not process the LLBs at a sufficiently high speed, there may be a relatively large quantity of LLBs in the buffer or even space of the buffer is full, resulting in the inability to continue buffering LLBs and leading to a data loss. If the MDP inserts and sends an LLBSP after sending n LLBs, because the MUP does not need to put the LLBSP into the buffer, the MUP has buffer time to process the received LLBs as soon as possible, that is, sending the LLBSP can reduce an average speed at which the MDP sends the LLBs, thereby ensuring clock synchronization between the MDP and the MUP. It should be noted that the MDP may insert one LLBSP after sending the n LLBs, or may insert a plurality of LLBSPs. This is not limited in this application.

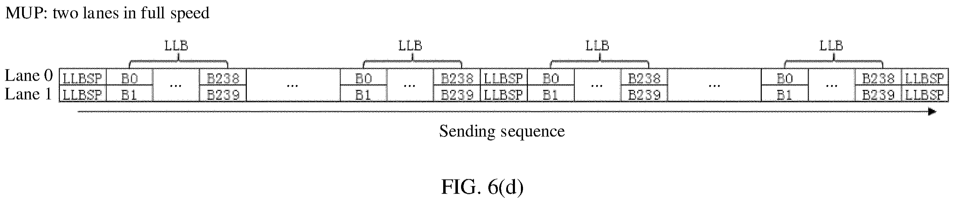

Similarly, the MUP sends LLBs to the MDP on two lanes, and inserts and sends one LLBSP every m LLBs, where m is a positive integer. Herein, m may be equal to or not equal to n. A manner in which the MUP sends the LLB and the LLBSP is similar to a manner in which the MDP sends the LLB and the LLBSP. A manner in which the MDP receives the LLB and the LLBSP is similar to a manner in which the MUP receives the LLB and the LLBSP. Details are not described again. FIG. 6(d) is an example diagram of lane allocation used when the MUP sends an LLB according to an embodiment of this application. In this example, one LLB includes 240 bytes. Bytes B0, B2, ..., and B238 of the LLB are sent on a transmit lane 0 of the MUP, and bytes B1, B3, ..., and B239 of the LLB are sent on a transmit lane 1 of the MUP.

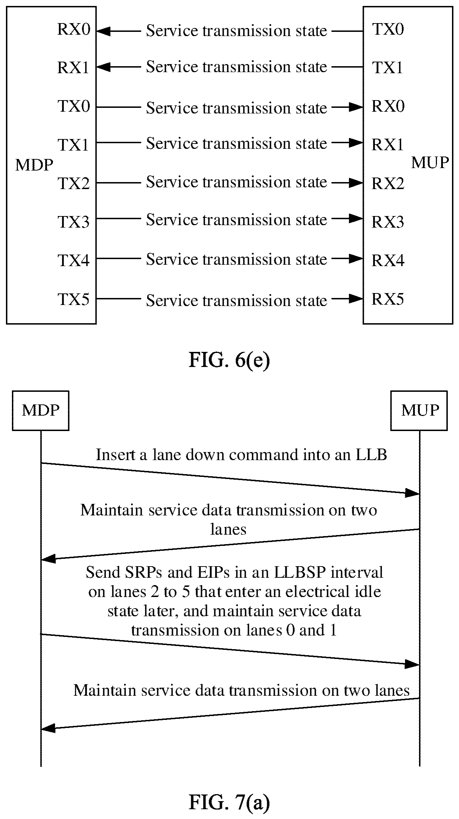

FIG. 6(e) is a diagram of service transmission in a full-speed state according to an embodiment of this application. It can be learned that all transmit lanes (that is, the six transmit lanes) of the MDP remain in the service transmission state, and all transmit lanes (that is, the two transmit lanes) of the MUP also remain in the service transmission state. That is, the lanes 0 to 5 of the MDP are in the service transmission state, and the lanes 0 and 1 of the MUP are in the service transmission state.

Scenario 2: The MDP enters the idle state, and the MUP remains in the full-speed state.

After the foregoing scenario 1, if there is a decrease in the bandwidth requirement of the MDP, some lanes may be disabled. For example, the MDP disables four lanes, to enter the idle state. It is assumed that the MDP determines to disable the lanes 2 to 5, after the lanes are disabled, the lanes 0 and 1 of the MDP are in the service transmission state, and the lanes 2 to 5 are in the electrical idle state.

FIG. 7(a) is a diagram of the MDP entering the idle state according to an embodiment of this application. When detecting a decrease in the bandwidth requirement, the MDP may insert a lane down (lane down) command into the LLB. The lane down command is a specific example of a control command, and may be carried in the LLP. The lane down command instructs to disable four lanes.

For example, with reference to the structure of the LLP shown in FIG. 4(b), the following provides an example of the lane down command and the lane up command, as shown in Table 2.

**Table 2**

| Byte number | Bit | Field name | Description |
|---|---|---|---|
| 0 | 7:0 | PT | Transmission packet type, for example configured as 0x22 |
| 1 | 7:0 | PL | Transmission packet length, for example, configured as |
| | | | 0x01 |
| 2 | 0 | | State of the lane 0 after adjustment: 0 indicates an LLSH; and 1 indicates an LLSS. |
| | 1 | | State of the lane 1 after adjustment: 0 indicates an LLSH; and 1 indicates an LLSS. |
| | 2 | | State of the lane 2 after adjustment: 0 indicates an LLSH; and 1 indicates an LLSS. |
| | 3 | | State of the lane 3 after adjustment: 0 indicates an LLSH; and 1 indicates an LLSS. |
| | 4 | | State of the lane 4 after adjustment: 0 indicates an LLSH; and 1 indicates an LLSS. |
| | 5 | | State of the lane 5 after adjustment: 0 indicates an LLSH; and 1 indicates an LLSS. |
| | 6 | | 1 indicates the lane down command. |
| | 7 | | 1 indicates the lane up command. |
| 3 | 7:0 | PTL | Data packet check parameter 0 |
| 4 | 7:0 | | Data packet check parameter 1 |

With reference to the example in Table 2, if it is required to indicate to disable the lanes 2 to 5, 8-bit information of byte 2 (that is, the 3^{rd} byte) of the LLP in which the lane down command is located is 01111100. 01111100 sequentially corresponds to bits 0 to 7 from right to left.

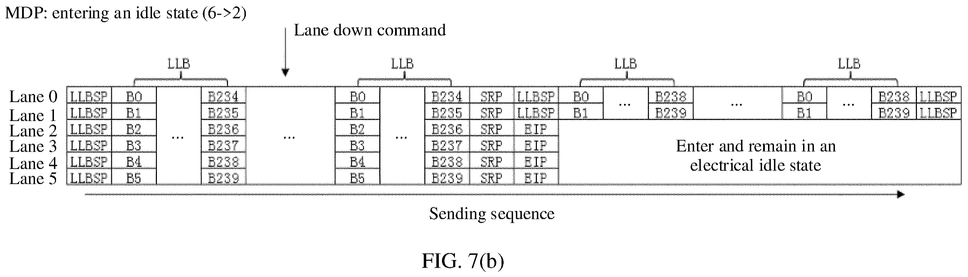

FIG. 7(b) is an example diagram of lane allocation used when the MDP sends the LLB according to an embodiment of this application. This example shows how to change from six transmit lanes to two transmit lanes for the MDP. After dynamic link width switching is started, the lanes 0 and 1 remain in the service data transmission state. When an LLBSP sending interval is entered, the state refresh pattern (SRP) is sent before the LLBSP is sent. The SRP indicates that the link width switching command takes effect.

On the lanes 2 to 5, the MDP waits to enter the LLBSP sending interval after sending the LLB, and stops sending the LLB when an LLBSP sending start moment arrives, and the LLBSP that originally needs to be sent is replaced with the SRP and an electrical idle pattern (electrical idle pattern, EIP) for sending. In other words, instead of sending the LLBSP, the SRP and the EIP are sent. After the MDP completes sending of the SRP and the EIP on the lanes 2 to 5, the lanes 2 to 5 enters the electrical idle state. In this case, the MDP enters the idle state. The link width switching command includes a lane down command and a lane up (lane up) command. In this example, the link width switching command refers to the lane down command. The EIP is used to trigger entering of the electrical idle state.

After the MUP obtains the lane down command through detecting and parsing on the lanes 0 to 5, if the MUP detects the SRP on any one of the lanes 0 to 5, the MUP determines that dynamic link width switching takes effect. Therefore, after detecting the EIP on the lanes 2 to 5, the MUP determines that the lanes 2 to 5 enter the electrical idle state.

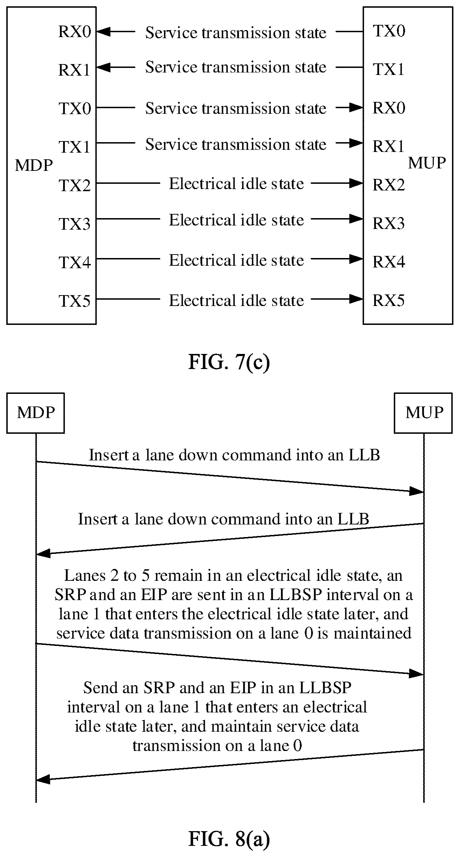

FIG. 7(c) is a diagram of service transmission of the MDP in the idle state and the MUP in the full-speed state according to an embodiment of this application. It can be learned that the lanes 0 and 1 of the MDP are in the service transmission state, and the lanes 2 to 5 are in the electrical idle state. The lanes 0 and 1 of the MUP are in the service transmission state.

Scenario 3: The MDP adjusts the idle state, and the MUP enters the idle state.

After the foregoing scenario 2, if there is a further decrease in the bandwidth requirement of the MDP, one more lane may be disabled. For example, the MDP continues to disable the lane 1 to adjust the idle state. At the same time, the bandwidth requirement of the MUP is also reduced, and the MUP disables the lane 1 and enters the idle state. After the MDP disables the lane 1, the lane 0 of the MDP is in the service transmission state, and the lanes 1 to 5 are in the electrical idle state. After the MUP disables the lane 1, the lane 0 of the MDP is in the service transmission state, and the lane 1 is in the electrical idle state.

FIG. 8(a) is a diagram of the MDP adjusting the idle state and the MUP entering the idle state according to an embodiment of this application. When detecting a decrease in the bandwidth requirement, the MDP inserts the lane down command into the LLB, specifies to disable the lanes 1 to 5, and starts dynamic link width switching. With reference to the example in Table 2, if it is required to indicate to disable the lanes 1 to 5, 8-bit information of byte 2 (that is, the 3^{rd} byte) of the LLP in which the lane down command is located is 01111110. 01111110 sequentially corresponds to bits 0 to 7 from right to left.

In addition, when detecting a decrease in the bandwidth requirement, the MUP inserts the lane down command into the LLB, specifies to disable the lane 1, and starts dynamic link width switching. With reference to the example in Table 2, if it is required to indicate to disable the lane 1, 8-bit information of byte 2 (that is, the 3^{rd} byte) of the LLP in which the lane down command is located is 01xxxx10. 01xxxx10 sequentially corresponds to bits 0 to 7 from right to left. 'x' indicates any value, that is, may be 0, or may be 1. When parsing the 8-bit information, the MDP does not need to pay attention to specific values of bits 2 to 5.

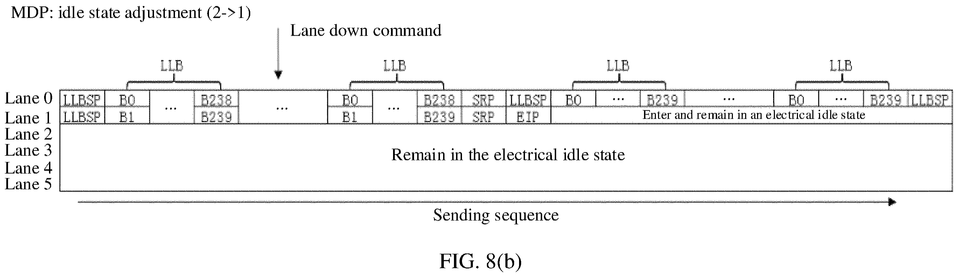

FIG. 8(b) is an example diagram of lane allocation used when the MDP sends the LLB according to an embodiment of this application. This example shows how to change from two transmit lanes to one transmit lane for the MDP. After dynamic link width switching is started, the lane 0 remains in the service data transmission state. When an LLBSP sending interval is entered, the SRP is sent before the LLBSP is sent.

On the lane 1, the MDP waits to enter the LLBSP sending interval after sending the LLB, and stops sending the LLB when an LLBSP sending start moment arrives, and the LLBSP that originally needs to be sent is replaced with the SRP and the EIP for sending. In other words, instead of sending the LLBSP, the SRP and EIP are sent. After the MDP completes sending of the SRP and the EIP on the lane 1, the lane 1 enters the electrical idle state. In addition, the lanes 2 to 5 remain in the electrical idle state. In this case, the MDP completes adjustment of the idle state. After the MUP obtains the lane down command through detecting and parsing on the lanes 0 and 1, if the MUP detects the SRP on any one of the lanes 0 and 1, the MUP determines that dynamic link width switching takes effect. Therefore, after detecting the EIP on the lane 1, the MUP determines that the lane 1 enters the electrical idle state.

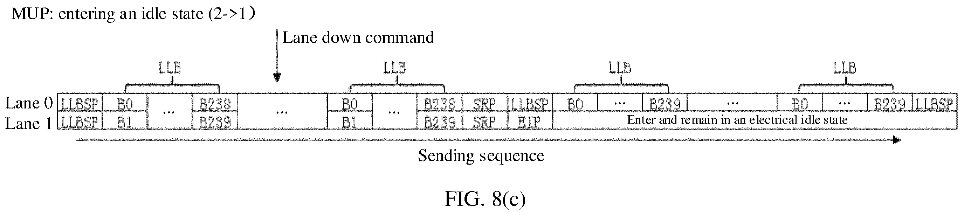

FIG. 8(c) is an example diagram of lane allocation used when the MUP sends the LLB according to an embodiment of this application. This example shows how to change from two transmit lanes to one transmit lane for the MUP. The MUP disables the transmit lane 1 of the MUP in a manner similar to a manner of lane down of the MDP. Details are not described again.

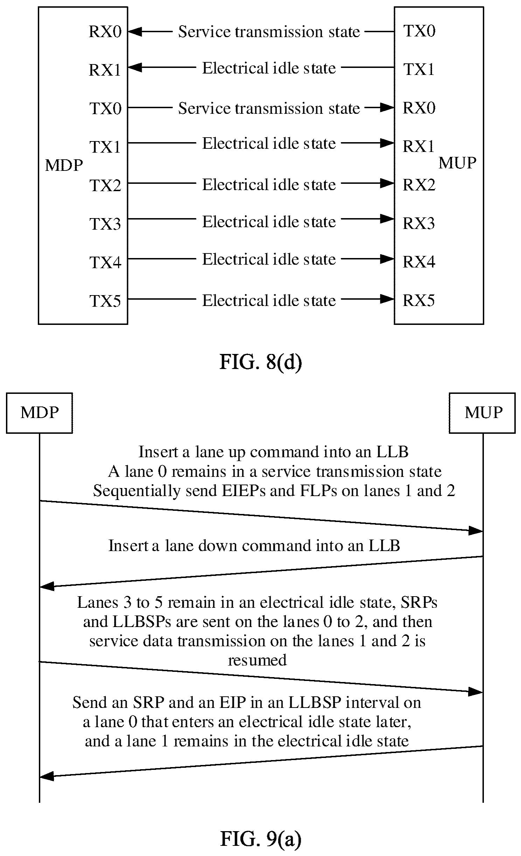

FIG. 8(d) is a diagram of service transmission of the MDP in the idle state and the MUP in the idle state according to an embodiment of this application. It can be learned that the lane 0 of the MDP is in the service transmission state, and the lanes 1 to 5 are in the electrical idle state. The lane 0 of the MUP is in the service transmission state, and the lane 1 is in the electrical idle state.

Scenario 4: The MDP adjusts the idle state, and the MUP enters the zero-speed state.

After the foregoing scenario 3, if there is an increase in the bandwidth requirement of the MDP, two lanes may be enabled. For example, the MDP enables the lanes 1 and 2 to adjust the idle state. In addition, if the MUP has no data to be transmitted, the MUP enters the zero-speed state, that is, the lane 0 is further disabled, so that all transmit lanes of the MUP are disabled. After the MDP enables the lanes 1 and 2, the lanes 0 to 2 of the MDP are in the service transmission state, and the lane 3 to 5 are in the electrical idle state. After the MUP disables the lane 0, the lanes 0 and 1 of the MDP are in the electrical idle state.

FIG. 9(a) is a diagram of the MDP adjusting the idle state and the MUP entering the zero-speed state according to an embodiment of this application. When detecting an increase in the bandwidth requirement, the MDP inserts the lane up command into the LLB, specifies to enable lanes 0 to 2 (that is, disable lanes 3 to 5), and starts dynamic link width switching. With reference to the example in Table 2, if the MDP requires to indicate to enable lanes 0 to 2, 8-bit information of byte 2 (that is, the 3^{rd} byte) of the LLP in which the lane up command is located is 10111000. 10111000 sequentially corresponds to bits 0 to 7 from right to left.

In addition, when detecting a decrease in the bandwidth requirement, the MUP inserts the lane down command into the LLB, specifies to disable the lanes 0 and 1, and starts dynamic link width switching. With reference to the example in Table 2, if it is required to indicate to disable the lanes 0 and 1, 8-bit information of byte 2 (that is, the 3^{rd} byte) of the LLP in which the lane down command is located is 01xxxx11. 01xxxx11 sequentially corresponds to bits 0 to 7 from right to left. 'x' indicates any value, that is, may be 0, or may be 1. When parsing the 8-bit information, the MDP does not need to pay attention to specific values of bits 2 to 5.

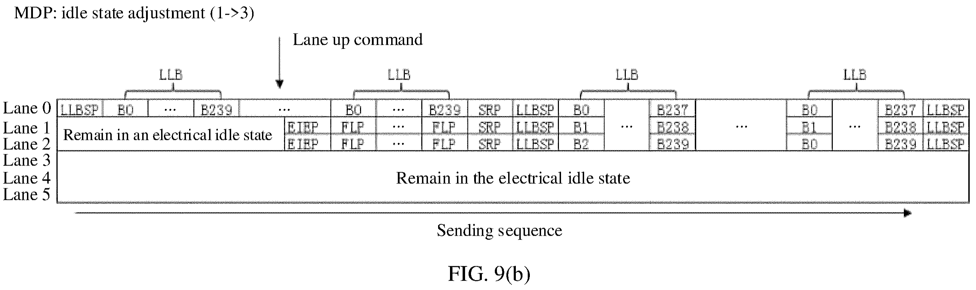

FIG. 9(b) is an example diagram of lane allocation used when the MDP sends the LLB according to an embodiment of this application. This example shows how to change from one transmit lane to three transmit lanes for the MDP. After dynamic link width switching is started, the lane 0 remains in the service data transmission state, and the lane up command is inserted into the LLB sent on the lane 0. In addition, when the LLBSP sending interval is entered, the SRP is sent before the LLBSP is sent.

The MDP immediately starts fast link locking after sending the lane up command on the lane 0. Specifically, the MDP sends the electrical idle exit pattern (EIEP) on lanes 1 and 2, exits the electrical idle state, and then continuously sends fast lock patterns (FLP) for fast link locking. If the MUP receives the lane up command on the lane 0 and detects the EIEP on the lanes 1 and 2, the MUP enables the lanes 1 and 2 to exit the electrical idle state. At the same time, the MUP detects the FLP on the lanes 1 and 2 and starts fast link locking. The EIEP is used to trigger exiting from the electrical idle state. The FLP is used to implement fast lane locking between the MDP and the MUP. If a sending quantity of the MDP on the FLP reaches a preset threshold, the MDP sends the SRP in an LLBSP sending interval of transmit lanes 0 to 2, and the lane up command takes effect. Subsequently, service transmission is resumed on the lanes 0 to 2, and the LLBSP and the LLB are sequentially sent on the lanes 0 to 2. The MUP detects the FLP for fast locking. After the locking is completed, if the MUP detects the SRP, it is determined that the lane up command takes effect, and the MUP determines that receive lanes 0 to 2 resume service data transmission.

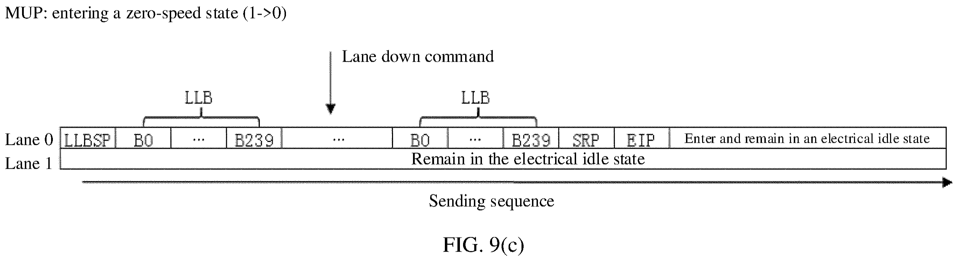

FIG. 9(c) is an example diagram of lane allocation used when the MUP sends the LLB according to an embodiment of this application. This example shows how to change from one transmit lane to zero transmit lanes for the MUP. When detecting that the bandwidth requirement is 0, the MUP inserts the lane down command into the LLB, specifies to disable the lanes 0 and 1, and starts dynamic link width switching. After the lane down command of the MUP is sent, the MUP waits to enter the LLBSP sending interval, and sequentially sends the SRP and the EIP on the transmit lane 0. After the sending is completed, the transmit lane 0 enters the electrical idle state, and the transmit lane 1 of the MUP remains in the electrical idle state. In this case, the MUP enters the zero-speed state. After detecting and parsing the lane down command on the lane 0, the MDP continues to detect the SRP. After the SRP is detected, the lane down command takes effect. Subsequently, after the MDP detects the EIP on the receive lane 0, the receive lane 0 enters the electrical idle state.

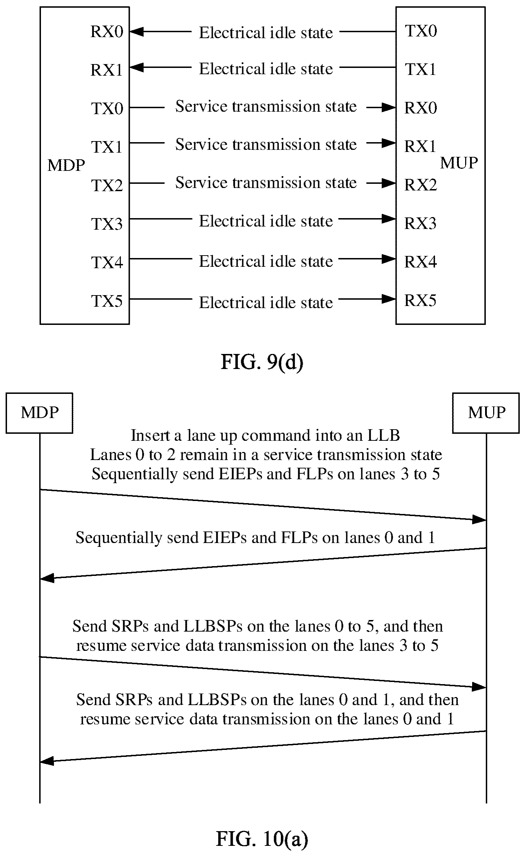

FIG. 9(d) is a diagram of service transmission of the MDP in the idle state according to an embodiment of this application. It can be learned that the lanes 0 to 2 of the MDP are in the service transmission state, and the lanes 3 to 5 are in the electrical idle state. The lanes 0 and 1 of the MUP are in the electrical idle state.

Scenario 5: Both the MDP and the MUP are restored to the full-speed state.

After the foregoing scenario 4, if there are increases in the bandwidth requirements of the MDP and the MUP, both the MDP and the MUP need to be restored to the full-speed state. That is, the MDP needs to enable six transmit lanes, and the MUP needs to enable two transmit lanes.

FIG. 10(a) is a diagram of restoring the MDP and the MUP to the full-speed state according to an embodiment of this application. When detecting an increase in the bandwidth requirement, the MDP inserts the lane up command into the LLB, specifies to enable lanes 0 to 5, and starts dynamic link width switching. With reference to the example in Table 2, if the MDP requires to indicate to enable the lanes 0 to 5, 8-bit information of byte 2 (that is, the 3^{rd} byte) of the LLP in which the lane up command is located is 10000000. 10000000 sequentially corresponds to bits 0 to 7 from right to left.

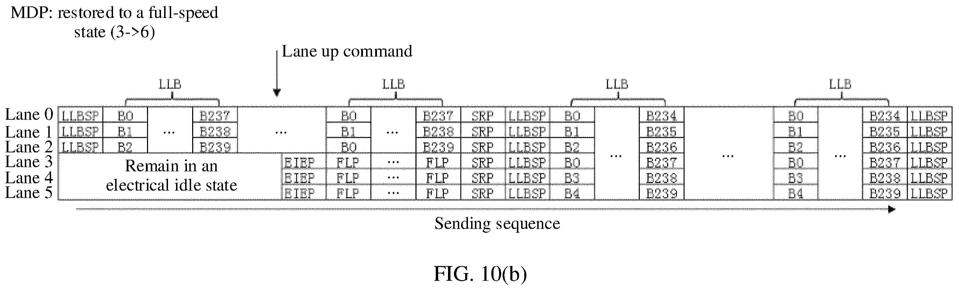

FIG. 10(b) is an example diagram of lane allocation used when the MDP sends the LLB according to an embodiment of this application. This example shows how to change from three transmit lanes to six transmit lanes for the MDP. After dynamic link width switching is started, the lanes 0 to 2 remains in the service data transmission state, and the lane up command is inserted into the LLB sent on the lanes 0 to 2. In addition, when the LLBSP sending interval is entered, the SRP is sent before the LLBSP is sent.

The MDP immediately starts fast link locking after sending the lane up command on the lanes 0 to 2. Specifically, the MDP sends the EIEP on lanes 3 to 5, exits the electrical idle state, and then continuously sends FLPs for fast link locking. If the MUP receives the lane up command on the lanes 0 to 2 and detects the EIEP on the lanes 3 to 5, the MUP enables the lanes 3 to 5 to exit the electrical idle state. At the same time, the MUP detects the FLP on the lanes 3 to 5 and starts fast link locking. The EIEP is used to trigger exiting from the electrical idle state. The FLP is used to implement fast lane locking between the MDP and the MUP. If a sending quantity of the MDP on the FLP reaches a preset threshold, the MDP sends the SRP in an LLBSP sending interval of transmit lanes 0 to 5, and the lane up command takes effect. Subsequently, service transmission is resumed on the lanes 0 to 5, and the LLBSP and the LLB are sequentially sent on the lanes 0 to 5. The MUP detects the FLP for fast locking. After the locking is completed, if the MUP detects the SRP, it is determined that the lane up command takes effect, and the MUP determines that receive lanes 0 to 5 resume service data transmission. The MDP completes adjustment to restore the full-speed state.

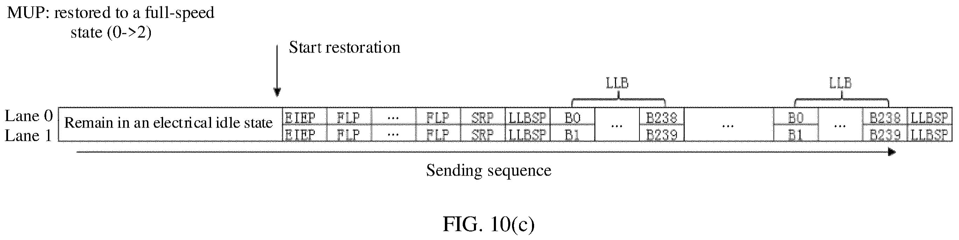

FIG. 10(c) is an example diagram of lane allocation used when the MUP sends the LLB according to an embodiment of this application. This example shows how to change from zero transmit lanes to two transmit lanes for the MUP. Currently, the MUP does not have a lane for service data transmission. Therefore, the MUP cannot be restored to the full-speed state by using the lane up command. When detecting that new data needs to be sent, the MUP starts fast locking and is restored to the full-speed state. EIEPs are sent at the same time on all transmit lanes of the MUP, and then FLPs are sent to start fast link locking. After the MDP detects the EIEP on the receive lane, all receive lanes start fast locking. If a sending quantity of the MUP on the FLP reaches a preset threshold, the MUP sends the SRP, and then is restored to the full-speed state. Each lane resumes service data sending to sequentially send the LLBSP and the LLB. If the MDP detects the SRP after fast locking is completed, the MDP determines that the receive lane is restored to the full-speed state. The MUP completes adjustment to restore the full-speed state.

For a diagram of service transmission of the MDP and the MUP in the full-speed state, refer to FIG. 6(e). It can be learned that the lanes 0 to 5 of the MDP are in the service transmission state. The lanes 0 and 1 of the MUP are in the service transmission state.

In the foregoing example, the link width adjustment corresponding to the MDP and the link width adjustment corresponding to the MUP are independent of each other, do not need to be negotiated, and are controlled unilaterally by a transmit end device. Dynamic link width switching is easy to implement. In addition, dynamic link width switching can override from 0 lanes to the maximum quantity of lanes (that is, x0, x1, x2, x3, x4, x5 and x6), so that power consumption control is more flexible, and power consumption reduction control is more refined.

In the examples of the foregoing scenario 1 to scenario 5, only one link width switching command (that is, the lane down command or the lane up command) is sent each time. However, this application is not limited to sending only one link width switching command. In this embodiment of this application, before the SRP is sent for state synchronization, the link width switching command is allowed to be sent for a plurality of times, to implement command overriding. The MDP is used as an example below for description. It is assumed that the MDP currently enables transmit lanes 0 to 2 and disables transmit lanes 3 to 5. Based on this example, there are the following four scenarios.

Scenario a: The lane down command overrides the lane down command.

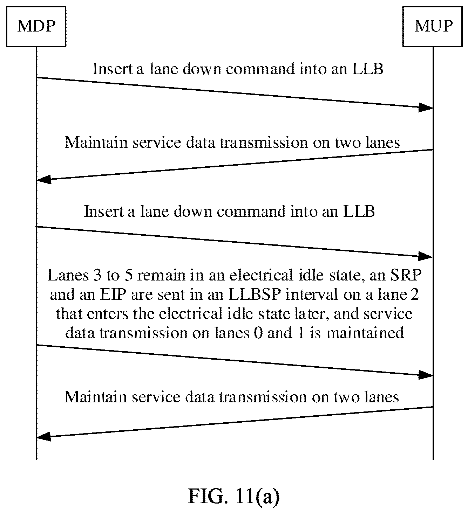

FIG. 11(a) is an example diagram of a scenario in which the lane down command overrides the lane down command according to an embodiment of this application. When detecting that there is a decrease in the bandwidth requirement, the MDP inserts the lane down command into the LLB to specify five lanes to be disabled (for example, lanes 1 to 5 are specified to be disabled). Before entering the LLBSP interval, the MDP detects a bandwidth requirement change again, and the bandwidth requirement indicates that two lanes are required. Therefore, a new lane down command needs to be sent to override the previous lane down command. The new lane down command is used to specify to disable four lanes (for example, specify to disable lanes 2 to 5). During this period, the MDP maintains service data transmission on three lanes (that is, lanes 0 to 2). The MDP waits to enter the LLBSP sending interval, and sequentially inserts the SRP and EIP into the transmit lane 2. After the sending is completed, the electrical idle state is entered, and the MDP completes the idle state adjustment. When receiving the SRP, the MUP determines that only the latest received link width switching command is valid regardless of the quantity of received link width switching commands. The current scenario corresponds to the last lane down command, and other commands are determined as invalid commands.

Scenario b: The lane up command overrides the lane down command.

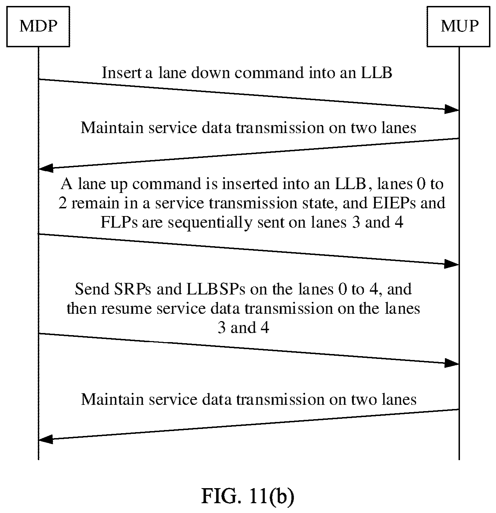

FIG. 11(b) is an example diagram of a scenario in which the lane up command overrides the lane down command according to an embodiment of this application. When detecting that there is a decrease in the bandwidth requirement, the MDP inserts the lane down command into the LLB to specify five lanes to be disabled (for example, lanes 1 to 5 are specified to be disabled). Before entering the LLBSP interval, the MDP detects a bandwidth requirement change again, and the bandwidth requirement indicates that five lanes are required. Therefore, a new lane up command needs to be sent to override the previous lane down command. The new lane up command is used to specify to enable five lanes (for example, specify to enable lanes 0 to 4). During this period, the MDP maintains service data transmission on three lanes (that is, lanes 0 to 2), sends the EIEP on the re-enabled lanes 3 and 4, exits the electrical idle state, and then continuously sends FLPs for fast link locking. The MDP waits to enter the LLBSP sending interval, and sequentially inserts the SRP and the LLBSP into the transmit lanes 0 to 4. After the sending is completed, the lanes 0 to 4 enter the service transmission phase, and the MDP completes the idle state adjustment. When receiving the SRP, the MUP determines that only the latest received link width switching command is valid regardless of the quantity of received link width switching commands. The current scenario corresponds to the last lane up command, and other commands are determined as invalid commands.

Scenario c: The lane down command overrides the lane up command.

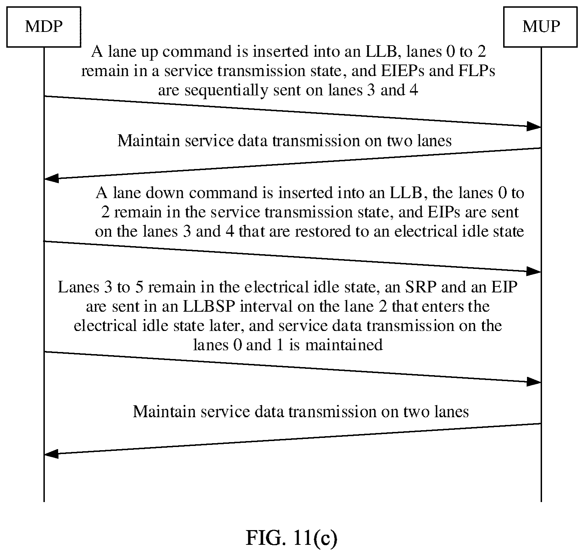

FIG. 11(c) is an example diagram of a scenario in which the lane down command overrides the lane up command according to an embodiment of this application. When detecting that there is an increase in the bandwidth requirement, the MDP inserts the lane up command into the LLB to specify five lanes to be enabled (for example, lanes 0 to 4 are specified to be enabled). Before entering the LLBSP interval, the MDP detects a bandwidth requirement change again, and the bandwidth requirement indicates that two lanes are required. Therefore, a new lane down command needs to be sent to override the previous lane up command. The new lane down command is used to specify to disable four lanes (for example, specify to disable lanes 2 to 5). During this period, the MDP maintains service data transmission on three lanes (that is, lanes 0 to 2). The MDP waits to enter the LLBSP sending interval, and sequentially inserts the SRP and EIP into the transmit lane 2. After the sending is completed, the electrical idle state is entered, and the MDP completes the idle state adjustment. When receiving the SRP, the MUP determines that only the latest received link width switching command is valid regardless of the quantity of received link width switching commands. The current scenario corresponds to the last lane down command, and other commands are determined as invalid commands.

Scenario d: The lane up command overrides the lane up command.

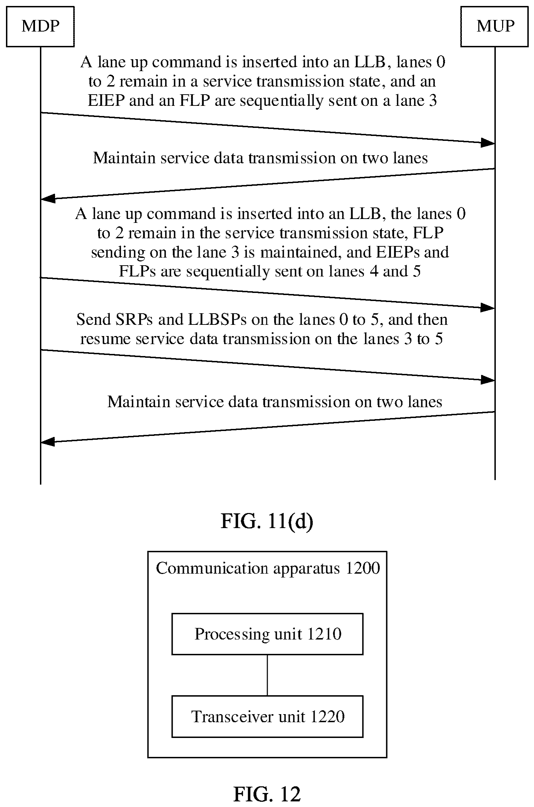

FIG. 11(d) is an example diagram of a scenario in which the lane up command overrides the lane up command according to an embodiment of this application. When detecting that there is an increase in the bandwidth requirement, the MDP inserts the lane up command into the LLB to specify four lanes to be enabled. Before entering the LLBSP interval, the MDP detects a bandwidth requirement change again, and the bandwidth requirement indicates that six lanes are required. Therefore, a new lane up command needs to be sent to override the previous lane up command. The new lane up command is used to specify to enable the six lanes (that is, the transmit lanes 0 to 5). During this period, the MDP maintains service data transmission on three lanes (that is, lanes 0 to 2), sends the EIEP on the re-enabled lanes 3 to 5, exits the electrical idle state, and then continuously sends FLPs for fast link locking. The MDP waits to enter the LLBSP sending interval, and sequentially inserts the SRP and the LLBSP into the transmit lanes 0 to 5. After the sending is completed, the lanes 0 to 5 enter the service transmission phase, and the MDP completes the idle state adjustment. When receiving the SRP, the MUP determines that only the latest received link width switching command is valid regardless of the quantity of received link width switching commands. The current scenario corresponds to the last lane up command, and other commands are determined as invalid commands.

It may be understood that, to implement the functions in the foregoing embodiments, the first device or the second device includes corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

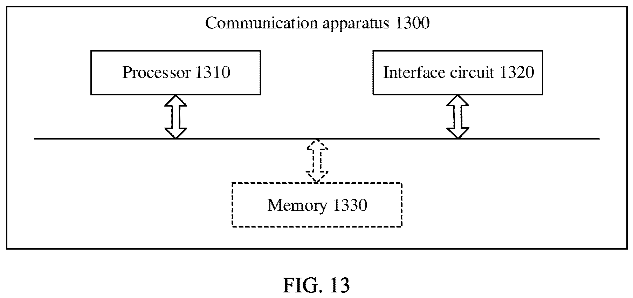

FIG. 12 and FIG. 13 are diagrams of structures of possible communication apparatuses according to embodiments of this application. These communication apparatuses may be configured to implement functions of the first device or the second device in the foregoing method embodiments, and therefore can also implement beneficial effects of the foregoing method embodiments. In this embodiment of this application, the communication apparatus may be a first device or a second device, or may be a module (for example, a chip) in a first device or a second device.

As shown in FIG. 12, a communication apparatus 1200 includes a processing unit 1210 and a transceiver unit 1220. The communication apparatus 1200 is configured to implement functions of the first device or the second device in the foregoing method embodiments.

When the communication apparatus 1200 is configured to implement the functions of the first device (or the MDP) in the foregoing method embodiments, the processing unit 1210 is configured to control the transceiver unit 1220 to: send a logical layer block to a second device, where the logical layer block includes a link width switching command, and the link width switching command is used to adjust a state of a transmit lane from a first device to the second device; and send a state refresh pattern to the second device, where the state refresh pattern is used for the link width switching command to synchronously take effect between the first device and the second device.

In a possible implementation method, that the link width switching command is used to adjust the state of the transmit lane from the first device to the second device includes: The link width switching command indicates an adjusted state of the transmit lane from the first device to the second device, and the state includes a service transmission state and an electrical idle state.

In a possible implementation method, that the logical layer block includes the link width switching command includes: The logical layer block includes a logical layer packet, and the logical layer packet includes the link width switching command.

In a possible implementation method, the processing unit 1210 is further configured to control the transceiver unit 1220 to periodically send a logical layer block start pattern to the second device, where the logical layer block start pattern is used for clock synchronization and lock state check between the first device and the second device.

In a possible implementation method, the link width switching command is a lane down command, and the lane down command is used to decrease a quantity of transmit lanes in the service transmission state in transmit lanes from the first device to the second device.

In a possible implementation method, the transmit lanes from the first device to the second device include at least one first lane. The processing unit 1210 is further configured to control the transceiver unit 1220 to: send an electrical idle pattern on the at least one first lane, where the electrical idle pattern indicates to adjust a state of the at least one first lane from the service transmission state to the electrical idle state; and adjust the state of the at least one first lane to the electrical idle state.

In a possible implementation method, the link width switching command is a lane up command, and the lane up command is used to increase a quantity of transmit lanes in the service transmission state in transmit lanes from the first device to the second device.

In a possible implementation method, the transmit lanes from the first device to the second device include at least one second lane. The processing unit 1210 is further configured to control the transceiver unit 1220 to: send an electrical idle exit pattern on the at least one second lane, where the electrical idle exit pattern indicates to adjust a state of the second lane from the electrical idle state to the service transmission state; and adjust the state of the at least one second lane to the service transmission state.

In a possible implementation method, the processing unit 1210 is further configured to control the transceiver unit 1220 to send a fast lock pattern on the at least one second lane, where the fast lock pattern is used by the second device for fast locking of the at least one second lane.

In a possible implementation method, the transmit lanes from the first device to the second device include at least one target lane, and the target lane is a lane in the service transmission state. The processing unit 1210 is specifically configured to control the transceiver unit 1220 to send the logical layer block on the at least one target lane.

In a possible implementation method, the logical layer block further includes at least one transaction layer packet, and the transaction layer packet is used to carry service data.

When the communication apparatus 1200 is configured to implement the functions of the second device (or the MUP) in the foregoing method embodiments, the processing unit 1210 is configured to control the transceiver unit 1220 to: receive a logical layer block from a first device, where the logical layer block includes a link width switching command, and the link width switching command is used to adjust a state of a transmit lane from the first device to the second device; and receive a state refresh pattern from the first device, where the state refresh pattern is used for the link width switching command to synchronously take effect between the first device and the second device.

In a possible implementation method, that the link width switching command is used to adjust the state of the transmit lane from the first device to the second device includes: The link width switching command indicates an adjusted state of the transmit lane from the first device to the second device, and the state includes a service transmission state and an electrical idle state.

In a possible implementation method, that the logical layer block includes the link width switching command includes: The logical layer block includes a logical layer packet, and the logical layer packet includes the link width switching command.

In a possible implementation method, the processing unit 1210 is further configured to control the transceiver unit 1220 to periodically receive a logical layer block start pattern from the first device, where the logical layer block start pattern is used for clock synchronization and lock state check between the first device and the second device.

In a possible implementation method, the link width switching command is a lane down command, and the lane down command is used to decrease a quantity of transmit lanes in the service transmission state in transmit lanes from the first device to the second device.

In a possible implementation method, the transmit lanes from the first device to the second device include at least one first lane. The processing unit 1210 is further configured to control the transceiver unit 1220 to: receive an electrical idle pattern on the at least one first lane, where the electrical idle pattern indicates to adjust a state of the at least one first lane from the service transmission state to the electrical idle state; and adjust the state of the at least one first lane to the electrical idle state.

In a possible implementation method, the link width switching command is a lane up command, and the lane up command is used to increase a quantity of transmit lanes in the service transmission state in transmit lanes from the first device to the second device.

In a possible implementation method, the transmit lanes from the first device to the second device include at least one second lane. The processing unit 1210 is further configured to control the transceiver unit 1220 to: receive an electrical idle exit pattern on the at least one second lane, where the electrical idle exit pattern indicates to adjust a state of the at least one second lane from the electrical idle state to the service transmission state; and adjust the state of the at least one second lane to the service transmission state.

In a possible implementation method, the processing unit 1210 is further configured to control the transceiver unit 1220 to receive a fast lock pattern on the second lane, where the fast lock pattern is used by the second device for fast locking of the second lane.

In a possible implementation method, the transmit lanes from the first device to the second device include at least one target lane, and the target lane is a lane in the service transmission state. The processing unit 1210 is specifically configured to control the transceiver unit 1220 to receive the logical layer block on the at least one target lane.

In a possible implementation method, the logical layer block further includes at least one transaction layer packet, and the transaction layer packet is used to carry service data.

When the communication apparatus 1200 is configured to implement the functions of the first device (or the MDP) in the foregoing method embodiments, the processing unit 1210 is configured to control the transceiver unit 1220 to: send an electrical idle exit pattern on a transmit lane from the first device to a second device, where the electrical idle exit pattern indicates that a state of the transmit lane from the first device to the second device is adjusted from an electrical idle state to a service transmission state; and continuously send fast lock patterns on the transmit lane from the first device to the second device, where the fast lock pattern is used by the second device for fast locking of the transmit lane from the first device to the second device.

In a possible implementation method, the processing unit 1210 is further configured to control the transceiver unit 1220 to: when a quantity of sent fast lock patterns is greater than a first threshold, send a state refresh pattern on the transmit lane from the first device to the second device, where the state refresh pattern is used for the transmit lane from the first device to the second device to synchronously enter the service transmission state.

In a possible implementation method, the processing unit 1210 is further configured to: after controlling the transceiver unit 1220 to send the state refresh pattern, adjust the state of the transmit lane from the first device to the second device to the service transmission state.

When the communication apparatus 1200 is configured to implement the functions of the second device (or the MUP) in the foregoing method embodiments, the processing unit 1210 is configured to control the transceiver unit 1220 to: receive an electrical idle exit pattern on a transmit lane from a first device to the second device, where the electrical idle exit pattern indicates that a state of the transmit lane from the first device to the second device is adjusted from an electrical idle state to a service transmission state; and continuously receive fast lock patterns on the transmit lane from the first device to the second device, where the fast lock pattern is used by the second device for fast locking of the transmit lane from the first device to the second device.

In a possible implementation method, the processing unit 1210 is further configured to control the transceiver unit 1220 to receive a state refresh pattern on the transmit lane from the first device to the second device, where the state refresh pattern is used for the transmit lane from the first device to the second device to synchronously enter the service transmission state.

In a possible implementation method, the processing unit 1210 is further configured to: after controlling the transceiver unit 1220 to receive the state refresh pattern, adjust the state of the transmit lane from the first device to the second device to the service transmission state.

For more detailed descriptions of the processing unit 1210 and the transceiver unit 1220, directly refer to related descriptions in the foregoing method embodiments. Details are not described herein again.

As shown in FIG. 13, a communication apparatus 1300 includes a processor 1310 and an interface circuit 1320. The processor 1310 and the interface circuit 1320 are coupled to each other. It may be understood that the interface circuit 1320 may be a transceiver or an input/output interface. Optionally, the communication apparatus 1300 may further include a memory 1330, configured to: store instructions executed by the processor 1310, store input data required by the processor 1310 to run the instructions, or store data generated after the processor 1310 runs the instructions.

When the communication apparatus 1300 is configured to implement the foregoing method embodiments, the processor 1310 is configured to implement the functions of the processing unit 1210, and the interface circuit 1320 is configured to implement the functions of the transceiver unit 1220.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a compact disc read-only memory (compact disc read-only memory, CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in the first device or the second device. Certainly, the processor and the storage medium may exist in the first device or the second device as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. The computer program (English: Computer Program) is a set of instructions that indicate each step of an electronic computer or another device having a message processing capability, is usually written in a program design language, and is run in a target system structure. When the computer programs or instructions are loaded and executed on a computer, all or some of the processes or the functions in embodiments of this application are performed. The computer may be a general-purpose computer, a dedicated computer, a computer network, a terminal device, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A link width switching method, applied to a first device or a module in a first device, and comprising:
sending a logical layer block to a second device, wherein the logical layer block comprises a link width switching command, and the link width switching command is used to adjust a state of a transmit lane from the first device to the second device; and
sending a state refresh pattern to the second device, wherein the state refresh pattern is used for the link width switching command to synchronously take effect between the first device and the second device.

2. The method according to claim 1, wherein that the link width switching command is used to adjust the state of the transmit lane from the first device to the second device comprises:
the link width switching command indicates an adjusted state of the transmit lane from the first device to the second device, and the state comprises a service transmission state and an electrical idle state.

3. The method according to claim 1 or 2, wherein that the logical layer block comprises the link width switching command comprises:
the logical layer block comprises a logical layer packet, and the logical layer packet comprises the link width switching command.

4. The method according to any one of claims 1 to 3, wherein the method further comprises:
periodically sending a logical layer block start pattern to the second device, wherein the logical layer block start pattern is used for clock synchronization and lock state check between the first device and the second device.

5. The method according to any one of claims 1 to 4, wherein the method further comprises:
the link width switching command is a lane down command, and the lane down command is used to decrease a quantity of transmit lanes in the service transmission state in transmit lanes from the first device to the second device.

6. The method according to claim 5, wherein the transmit lanes from the first device to the second device comprise at least one first lane; and
the method further comprises:
sending an electrical idle pattern on the at least one first lane, wherein the electrical idle pattern indicates to adjust a state of the at least one first lane from the service transmission state to the electrical idle state; and
adjusting the state of the at least one first lane to the electrical idle state.

7. The method according to any one of claims 1 to 4, wherein the link width switching command is a lane up command, and the lane up command is used to increase a quantity of transmit lanes in the service transmission state in transmit lanes from the first device to the second device.

8. The method according to claim 7, wherein the transmit lanes from the first device to the second device comprise at least one second lane; and
the method further comprises:
sending an electrical idle exit pattern on the at least one second lane, wherein the electrical idle exit pattern indicates to adjust a state of the at least one second lane from the electrical idle state to the service transmission state; and
adjusting the state of the at least one second lane to the service transmission state.

9. The method according to claim 8, wherein the method further comprises:
sending a fast lock pattern on the at least one second lane, wherein the fast lock pattern is used by the second device for fast locking of the at least one second lane.

10. The method according to any one of claims 1 to 9, wherein the transmit lanes from the first device to the second device comprise at least one target lane, and the target lane is a lane in the service transmission state; and
the sending the logical layer block to the second device comprises:
sending the logical layer block on the at least one target lane.

11. The method according to any one of claims 1 to 10, wherein the logical layer block further comprises at least one transaction layer packet, and the transaction layer packet is used to carry service data.

12. A link width switching method, applied to a second device or a module in a second device, and comprising:
receiving a logical layer block from a first device, wherein the logical layer block comprises a link width switching command, and the link width switching command is used to adjust a state of a transmit lane from the first device to the second device; and
receiving a state refresh pattern from the first device, wherein the state refresh pattern is used for the link width switching command to synchronously take effect between the first device and the second device.

13. The method according to claim 12, wherein that the link width switching command is used to adjust the state of the transmit lane from the first device to the second device comprises:
the link width switching command indicates an adjusted state of the transmit lane from the first device to the second device, and the state comprises a service transmission state and an electrical idle state.

14. The method according to claim 12 or 13, wherein that the logical layer block comprises the link width switching command comprises:
the logical layer block comprises a logical layer packet, and the logical layer packet comprises the link width switching command.

15. The method according to any one of claims 12 to 14, wherein the method further comprises:
periodically receiving a logical layer block start pattern from the first device, wherein the logical layer block start pattern is used for clock synchronization and lock state check between the first device and the second device.

16. The method according to any one of claims 12 to 15, wherein the method further comprises:
the link width switching command is a lane down command, and the lane down command is used to decrease a quantity of transmit lanes in the service transmission state in transmit lanes from the first device to the second device.

17. The method according to claim 16, wherein the transmit lanes from the first device to the second device comprise at least one first lane; and
the method further comprises:
receiving an electrical idle pattern on the at least one first lane, wherein the electrical idle pattern indicates to adjust a state of the at least one first lane from the service transmission state to the electrical idle state; and
adjusting the state of the at least one first lane to the electrical idle state.

18. The method according to any one of claims 12 to 15, wherein the link width switching command is a lane up command, and the lane up command is used to increase a quantity of transmit lanes in the service transmission state in transmit lanes from the first device to the second device.

19. The method according to claim 18, wherein the transmit lanes from the first device to the second device comprise at least one second lane; and
the method further comprises:
receiving an electrical idle exit pattern on the at least one second lane, wherein the electrical idle exit pattern indicates to adjust a state of the at least one second lane from the electrical idle state to the service transmission state; and
adjusting the state of the at least one second lane to the service transmission state.

20. The method according to claim 19, wherein the method further comprises:
receiving a fast lock pattern on the at least one second lane, wherein the fast lock pattern is used by the second device for fast locking of the second lane.

21. The method according to any one of claims 12 to 20, wherein the transmit lanes from the first device to the second device comprise at least one target lane, and the target lane is a lane in the service transmission state; and
the receiving the logical layer block from the first device comprises:
receiving the logical layer block on the at least one target lane.

22. The method according to any one of claims 12 to 21, wherein the logical layer block further comprises at least one transaction layer packet, and the transaction layer packet is used to carry service data.

23. A link width switching method, applied to a first device or a module in a first device, and comprising:
sending an electrical idle exit pattern on a transmit lane from the first device to a second device, wherein the electrical idle exit pattern indicates that a state of the transmit lane from the first device to the second device is adjusted from an electrical idle state to a service transmission state; and
continuously sending fast lock patterns on the transmit lane from the first device to the second device, wherein the fast lock pattern is used by the second device for fast locking of the transmit lane from the first device to the second device.

24. The method according to claim 23, wherein the method further comprises:
when a quantity of sent fast lock patterns is greater than a first threshold, sending a state refresh pattern on the transmit lane from the first device to the second device, wherein the state refresh pattern is used for the transmit lane from the first device to the second device to synchronously enter the service transmission state.

25. The method according to claim 24, wherein the method further comprises:
after sending the state refresh pattern, adjusting the state of the transmit lane from the first device to the second device to the service transmission state.

26. A link width switching method, applied to a second device or a module in a second device, and comprising:
receiving an electrical idle exit pattern on a transmit lane from a first device to the second device, wherein the electrical idle exit pattern indicates that a state of the transmit lane from the first device to the second device is adjusted from an electrical idle state to a service transmission state; and
continuously receiving fast lock patterns on the transmit lane from the first device to the second device, wherein the fast lock pattern is used by the second device for fast locking of the transmit lane from the first device to the second device.

27. The method according to claim 26, wherein the method further comprises:
receiving a state refresh pattern on the transmit lane from the first device to the second device, wherein the state refresh pattern is used for the transmit lane from the first device to the second device to synchronously enter the service transmission state.

28. The method according to claim 27, wherein the method further comprises:
after receiving the state refresh pattern, adjusting the state of the transmit lane from the first device to the second device to the service transmission state.

29. A communication apparatus, comprising a processor coupled to a memory, wherein the processor is configured to invoke a program stored in the memory, to perform the method according to any one of claims 1 to 11, or perform the method according to any one of claims 23 to 25.

30. A communication apparatus, comprising a processor coupled to a memory, wherein the processor is configured to invoke a program stored in the memory, to perform the method according to any one of claims 12 to 22, or perform the method according to any one of claims 26 to 28.

31. A computer-readable storage medium, wherein the storage medium stores a computer program or instructions, and when the computer program or the instructions are executed by a communication apparatus, the method according to any one of claims 1 to 28 is implemented.

32. A communication system, comprising a first device configured to perform the method according to any one of claims 1 to 11, and a second device configured to perform the method according to any one of claims 12 to 22.

33. A communication system, comprising a first device configured to perform the method according to any one of claims 23 to 25, and a second device configured to perform the method according to any one of claims 26 to 28.
